# EUROPÄISCHE PATENTSCHRIFT

(11) **EP 3 295 842 B1**
(45) Veröffentlichungstag und Bekanntmachung des Hinweises auf die Patenterteilung: **06.02.2019**
(21) Anmeldenummer: 16189377.1
(22) Anmeldetag: 19.09.2016
(51) Int. Cl.: A47J 39/00, A47J 37/04, G07F 11/66

(54) **WARMHALTEVORRICHTUNG**
WARMING DEVICE
DISPOSITIF DE MAINTIEN AU CHAUD

(43) Veröffentlichungstag der Anmeldung: 21.03.2018
(73) Patentinhaber: Schwarz, Johann, 2514 Traiskirchen (AT)
(72) Erfinder: Schwarz, Johann, 2514 Traiskirchen (AT)
(74) Vertreter: Schneider, Michael

(56) Entgegenhaltungen:
- EP-A1- 0 470 673
- EP-A2- 0 777 201
- DE-A1- 2 358 119

## Beschreibung

### Technisches Feld

Die Erfindung betrifft eine Warmhaltevorrichtung aufweisend eine Heizvorrichtung zum Abgeben von Wärme für das Warmhalten von separaten Fleischspeisen.

### Hintergrund

In Bistros von z.B. Tankstellen oder auch Imbisstuben aber auch im sogenannten Feinkostbereich von Supermärkten oder auch in Snackbars werden Fleischspeisen angeboten, die zunächst in einem Ofen aufgebacken bzw. aufgeheizt werden. Dabei wird sichergestellt, dass die Kerntemperatur der Fleischspeise erstmalig einen gesetzlich vorgeschriebenen Wert erreicht, wie z.B. 65 °C. Sobald die vorgeschriebene Kerntemperatur erreicht wurde, wird die Fleischspeise aus dem Ofen entnommen und in eine Warmhaltevorrichtung gelegt. Mit Ihrer Hilfe können unterschiedliche Fleischspeisen wie z.B. Leberkäse (auch Fleischkäse genannt), faschierter Braten (auch Hackbraten genannt - also aus Hackfleisch in Form eine Brotlaibes gebackenes Hackfleisch) oder Schopfbarten (gebratener Kamm des Schweines; Kamm = Nackenstück vom Schlachtvieh) warmgehalten werden, bevor sie stück- bzw. scheibenweise verkauft werden.

Solche Warmhaltevorrichtungen sind Geräte, die eine Türe zum Einlegen und Entnahme der Fleischspeisen aufweisen. Die Fleischspeisen ruhen in der Warmhaltestation auf Tassen. Im Boden der Warmhaltevorrichtung ist üblicherweise eine Heizung vorgesehen, welche die Speisen von unten her durch die Tasse warmhält. Von der Fleischspeise herabtropfendes Fett oder herabtropfender Fleischsaft wird mit besagter Tasse aufgefangen. Die Tasse kann bei Bedarf mit samt der Fleischspeise entnommen und entleert werden. Es existieren einstöckige aber auch zweistöckige Ausbildungsformen. Bei zweistöckigen Ausbildungen ruhen zwei Fleischspeisen in separaten Tassen übereinander, so dass die untere mit Hilfe der Heizung direkt und die obere indirekt durch Konvektion warmgehalten wird, was zu erheblichen Temperaturunterschieden in den Fleischspeisen führen kann.

Warmhaltevorrichtungen dieses Typs werden mitunter als "heiße Theke" bezeichnet oder beispielsweise auch unter der Marke RAGUS vertrieben.

Die Druckschrift DE-A-2 358 119 offenbart eine Warmhaltevorrichtung mit einer Heizvorrichtung zum geregelten Abgeben von Wärme für das Warmhalten von separaten Fleischspeisen, und einer Transportvorrichtung zum separaten Transportieren jeder der Fleischspeisen entlang einer geschlossen Transportbahn rund um die Heizvorrichtung herum. Die Fleischspeisen werden üblicherweise in Scheibenform geschnitten und oft auch in eine aufgeschnittene Semmel eingelegt verkauft. Bei der manuellen Herstellung einer z.B. Leberkäsesemmel durch das Bistro-Personal wird dabei üblicherweise wie folgt vorgegangen. Es wird zunächst die Semmel und ein Semmelmesser gegriffen und die Semmel manuell in zwei Teile, also in einen Ober- und einen Unterteil zerschnitten. Nachdem Semmelmesser und Semmelteile auf einer Arbeitsplatte abgelegt wurden, wird nach einer Gabel gegriffen. Dann wird die Türe der Warmhaltevorrichtung geöffnet, die Fleischspeise mit einer Gabel angestochen und entnommen und auf der Arbeitsplatte abgelegt und die Türe geschlossen. Es wird ein Fleischmesser gegriffen und von der Fleischspeise manuell eine Scheibe mit dem Fleischmesser abgeschnitten, das abgeschnittene Stück gegriffen und auf die Unterseite einer Semmel gelegt und manuell die Oberseite der Semmel gegriffen und auf die abgeschnittene Scheibe gelegt. Das Fleischmesser wird zwischenzeitlich abgelegt, besagte Gabel neuerlich gegriffen, die verbleibende Fleischspeise angestochen, die Türe der Warmhaltestation geöffnet und die Fleischspeise mit Hilfe der Gabel wieder auf ihren Platz in der Warmhaltestation gelegt, die Gabel entfernt, die Türe geschlossen, sowie die Gabel abgelegt. Danach wird die fertig gefüllte oder belegte Semmel gegriffen, verpackt und dem Kunden zum sofortigen Verzehr oder zur Mitnahme für den späteren Verzehr ausgehändigt.

Um bei solchen bekannten Warmhaltevorrichtungen eine für das Produkt selbst optimale Temperatur in der Warmhaltevorrichtung wie auch eine insbesondere den gesetzlichen Vorschriften entsprechende Kerntemperatur zu gewährleisten, müsste das Personal die Kerntemperatur der Fleischspeise laufend, also auch während der Lagerung in der Warmhaltevorrichtung, aber auch bei jeder Entnahme mit einem Thermometer kontrollieren und ggf. Maßnahmen setzen, wie z.B. die Heizleistung temporär erhöhe oder verringern oder die Fleischspeisen wenden oder anders platzieren. Diese laufende Kontrolle wie auch die fortwährend notwendigen manuellen Eingriffe in den Warmhalteprozess lassen sich in der Praxis jedoch gar nicht oder nur mangelhaft realisieren. So kann es bei Überhitzung zu unansehnlicher Krustenbildung an der Oberfläche der Fleischspeise kommen. Insbesondere kann es jedoch in Verkaufsspitzenzeiten vorkommen, dass die Fleischspeise längere Zeit auf der Arbeitsplatte ruht oder in rascher Folge aus der Warmhaltevorrichtung entnommen und wieder in sie zurückgelegt wird. Dabei besteht das Risiko, dass die Kerntemperatur der in Bearbeitung befindlichen Fleischspeise aber auch der in der Warmhaltevorrichtung gelagerten anderen Fleischspeisen zu weit absinkt. Somit ist das Risiko einer Besiedlung der Fleischspeise mit oder eine problematische Vermehrung von (möglicherweise gefährlichen) Keimen auf / in der Fleischspeise gegeben.

Als Folge können Fleischspeisen in den Verkauf gelangen, die einerseits wegen ihres Aussehens subjektiv nicht den Erwartungen der Kunden entsprechen und / oder andererseits objektiv nicht den einschlägigen gesetzlichen Hygienevorschriften entsprechen. Zudem hat sich in der Praxis gezeigt, dass die Handhabung der Fleischspeise äußerst umständlich und folglich Zeitaufwändig ist. Auch dies kann zur Kontaminierung der Fleischspeise mit Keimen beitragen. Die Bindung des Personal bei der aufwändigen Handhabung der Fleischspeise verhindert zudem seinen effizienten verkaufsfördernden Einsatz, wie z.B. Verkaufsgespräche mit dem Kunden. Zu guter Letzt werden bei manchen Kunden bedingt durch die Beobachtung der manuellen Handhabung der Fleischspeisen durch das Personal subjektive Bedenken hinsichtlich der Hygiene geweckt, was sich nachteilig auf die umgesetzte Menge der Fleischspeise auswirken kann.

Die Erfindung hat sich vor diesem Hintergrund die Aufgabe gestellt, eine Warmhaltevorrichtung bereitzustellen, bei der die vorangehend erörterten Probleme überwunden sind.

### Zusammenfassung der Erfindung

Diese Aufgabe wird durch eine Warmhaltevorrichtung gemäß Anspruch 1 gelöst. Der Gegenstand der Erfindung ist daher eine Warmhaltevorrichtung, insbesondere Bistro-Warmhaltevorrichtung, aufweisend eine Heizvorrichtung zum geregelten Abgeben von Wärme für das Warmhalten von separaten Fleischspeisen, wobei die Heizvorrichtung zum automatischen Regeln ihrer Heizleistung in Abhängigkeit von gemessenen Kerntemperaturen der Fleischspeisen ausgebildet ist, und eine Transportvorrichtung zum separaten Transportieren jeder der Fleischspeisen entlang einer geschlossen Transportbahn rund um die Heizvorrichtung herum und zum automatischen Positionieren einer der Fleischspeisen an einer Separierungsposition der Transportbahn, und eine Schneidevorrichtung zum automatischen Separieren einer Fleischspeisen-Scheibe von einer mit Hilfe der Transportvorrichtung an besagter Separierungsposition positionierten Fleischspeise.

Durch die erfindungsgemäßen Warmhaltevorrichtung ist erstmals sowohl im Bistrobereich wie auch im Straßenverkauf bei Snackständen eine vollständig automatisierte Bearbeitung von Fleischspeisen erreicht. Dabei werden einerseits die für den Kunden subjektiv relevanten Hygienekriterien, wie etwa das Abschneiden einer Scheibe ohne Berührung durch das Personal, aber auch objektive gesetzliche Hygienevorschriften, wie etwas das Vorliegen einer gesetzlich geforderten Kerntemperatur in der Fleischspeise erfüllt.

Fleischspeisen können wie Eingangs erörtert verschiedenster Art sein. Ihre Ausgangsform, also jene Form, in der sie in die Warmhaltevorrichtung eingelegt werden, ist im Wesentlichen als Ziegel, Block, Laib oder Stange zu charakterisieren, wobei sie eine Breite wie auch eine Höhe von ca. 15 cm und eine Länge von ca. 40 cm aufweisen können.

Bevorzugt handelt es sich bei der erfindungsgemäßen Warmhaltevorrichtung nicht um eine industrielle Anlage, mit der z.B. einige tausend Portionen z.B. pro Stunde hergestellt werden können, sondern um eine für den Bistrobereich geeignete Vorrichtung mit entsprechenden Abmessungen und Leistungsdaten. Eine solche Vorrichtung ist derart dimensioniert, dass sie im Bistro z.B. auf dem Tresen bzw. Ladentisch Platz findet.

Der Vollständigkeit wegen sei erwähnt, dass unter dem Begriff Kerntemperatur üblicherweise die in der Mitte einer Speise (besonders eines Bratens im Verlauf des Garvorgangs) herrschende Temperatur verstanden wird. Indem man die Temperatur an dem Punkt misst, der am weitesten von der Oberfläche der Fleischspeise entfernt liegt (also im Kern der Fleischspeise), kann sichergestellt werden, dass das gesamte Lebensmittel mindestens die dort im Kern der Fleischspeise gemessene Temperatur (also die Kerntemperatur) erreicht hat.

Weitere, besonders vorteilhafte Ausgestaltungen und Weiterbildungen der Erfindung ergeben sich aus den abhängigen Ansprüchen sowie der nachfolgenden Beschreibung.

Das Gehäuse der Warmhaltevorrichtung weist eine Bodenwand, eine Deckenwand, eine linke und eine rechte Seitenwand, eine Rückwand wie auch eine Vorderwand auf. In der Vorderwand oder einer der Seitenwände ist eine Türe integriert oder die besagte gesamte Wand ist als Türe ausgebildet, um den Zugriff auf das Innere der Warmhaltevorrichtung zu ermöglichen.

Die Warmaltenvorrichtung weist auch eine elektronische, programmierbare Steuerungseinrichtung auf, die zum Steuern der Heizvorrichtung, der Transportvorrichtung, der Schneidevorrichtung und weiterer Funktions- bzw. Baugruppen der Warmhaltevorrichtung ausgebildet ist, worauf an gegebener Stelle noch im Detail eingegangen ist. Sie kann mit Hilfe eines digitalen Mikroprozessors und zugehöriger digitaler Speicher wie auch digitaler Ein- und Ausgabebausteine (I/O-Bausteine) realisiert sein. Mit Hilfe der I/O-Bausteine können Signale und / oder Daten, wie z.B. Signale eines Temperaturfühlers, empfangen werden und anschließende die für den Betrieb der Warmhaltevorrichtung nötigen Parameter (in diesem Fall die Kerntemperatur) ermittelt bzw. verarbeitet werden. Mit Hilfe der I/O-Bausteine können aber auch Signale und Daten an Baugruppend der Warmhaltevorrichtung abgegeben werde, um z.B. die Heizleistung einzustellen oder die Transportvorrichtung anzusteuern oder die Schneidevorrichtung zu aktivieren bzw. zu deaktivieren. Zur Umsetzung der Signale und Daten in mechanische Funktionen ist auch eine Leistungselektronik sowie damit gekoppelte Elektromotoren vorgesehen, deren (Dreh-)Bewegung über entsprechende Getriebe in Bewegung der jeweiligen mechanischen Komponenten umgesetzt wird.

Die Steuerungseinrichtung kann jedoch auch eine Schnittstelle zu einem externen Eingabegerät aufweisen, mit dessen Hilfe die jeweilige Fleischspeise sowie die Anzahl der von der Fleischspeise zu separierenden Fleischspeise-Scheiben selektierbar ist. Dies kann ein eigenes Gerät oder auch das Kassenterminal in einem Bistro oder einer Tankstelle sein, welches auf Grund der vom Personal getätigten Eingaben über besagte Schnittstelle die Warmhaltevorrichtung ansteuert.

Die Steuerungseinrichtung kann auch die Türe überwachen und bei zu lange geöffnetem Zustand einen Alarm auslösen oder die Aktivierung der Schneidevorrichtung oder auch anderer mechanisch beweglicher Teile verhindern, um eine Gefährdung des Personals zu vermeiden.

Bei einer erfindungsgemäßen Warmhaltevorrichtung kann die Transportbahn ecken aufweisen oder teilweise gekrümmte wie auch gerade Bahnabschnitte enthalten. Bevorzugt ist die Transportbahn durch eine ovale, ellipsenförmige oder kreisförmige Bahn gegeben, insbesondere ist sie ein Kreis.

Dabei kann die Transportbahn in einer horizontalen Ebene verlaufen oder auch in einer zwischen der Horizontal- und der Vertikalrichtung geneigten Ebenen verlaufen. Besonders bevorzugt verläuft die Transportbahn in einer im Wesentlichen vertikal orientierten Ebene.

Dies kann z.B. so realisiert sein, dass sich hinter einer Blechplatte, die parallel zur vertikal verlaufenden Rückwand des Warmhaltevorrichtung positioniert ist, die Transportmechanismus verbirg. Die Blechplatte weist einen entsprechend breiten und in sich geschlossenen, kreisförmig verlaufenden Schlitz oder Spalt auf, durch den hindurch ein Verbindungsmittel (z.B. Stange, Gestänge, Lager, Gelenk, usw.) für jeden Transportbehälter verläuft. Daran ist der Transportbehälter für die jeweilige Fleischspeise befestigt, der somit vor der Blechplatte lokalisiert ist. Die Transportbehälter lassen sich entlang des Schlitzes bewegt.

Dabei ist es von Vorteil, wenn sich die Heizvorrichtung röhren oder trommelartig in horizontaler Richtung - insbesondere ausgehend von besagter Blechplatte - innerhalb der Transportbahn erstreckt. Somit können die Transportbehälter die Heizvorrichtung umkreisen, was eine möglichst gleichmäßige Wärmeabgabe an die verschiedenen Fleischspeisen ermöglicht. Bevorzugt ist die Heizvorrichtung und / oder die Transportvorrichtung so ausgebildet, dimensioniert und / oder zueinander angeordnet, dass die Fleischspeise entlang der Transportbahn parallel zur Heizvorrichtung gehalten ist.

Gemäß einer bevorzugten Ausbildungsform weist der Transportmechanismus jedoch parallel zur Rückwand lokalisiert und zwischen Rückwand und Heizvorrichtung angeordnet eine drehbare Blechscheibe auf, an der die individuellen Transportbehälter befestigt sind. Die drehbare Blechscheibe wird mit Hilfe eines Elektromotors, ggf. gekoppelt mit einem Getriebe in Rotation versetzt, so dass sich die Transportbehälter rund um die Heizvorrichtung bewegen.

Bevorzugt wiest die Transportvorrichtung für jede Fleischspeise separat ausgebildete Transportgondeln auf. So kann jede Fleischspeise individuell platziert werden und ihre Reihenfolge entlang der Transportbahn gemäß einer vordefinierten Ordnung eingehalten werden. Durch die physikalische Trennung der Transportgondeln voneinander, also ihre separate Anordnung entlang der Transportbahn, können auch gegenseitige Geruchs- wie auch Geschmacksbeeinflussungen der individuellen Fleischspeisen vermieden werden. Separate Gondeln erlauben es auch auf unterschiedliche Ernährungsaspekte verschiedener ethnischer Gruppen Rücksicht zu nehmen.

Die einzelnen Transportgondeln können mit dem Transportmechanismus fix verbunden sein, sodass sie sich bei einer Umrundung der Heizvorrichtung einmal um sich selbst drehen. Dabei können die Fleischspeisen mit Hilfe von Spießen der Transportgondeln gehalten werden oder in einem sie zumindest umfangsseitig umschließenden Käfig gehalten werden, um ein Herausfallen aus der Transportgondel zu vermeiden. Besonders bevorzugt ist jede der Transportgondeln derart ausgebildet und / oder gelagert, dass die darin aufgenommene Fleischspeise entlang der Transportbahn ihre Orientierung in Bezug auf die Richtung der Schwerkraft beibehält. Zu diesem Zweck ist jede Transportgondel drehbar, bevorzugt frei drehbar oberhalb des durch das System aus Gondel und Fleischspeise definierten Schwerpunkts, gelagert mit dem Transportmechanismus verbunden.

Zur automatischen Ermittlung der Kerntemperatur der Fleischspeise kann z.B. ein Infrarotthermometer eingesetzt werden. Damit können zumindest ihre Oberflächentemperaturen erfasst werden und dann mit Hilfe der Steuerungseinrichtung unter Anwendung geeigneter Modelle, welche z.B. die Art der Fleischspeise, ihre Form und ihr Gewicht berücksichtigen, die Kerntemperatur geschätzt werden. Basierend auf dieser Schätzung kann dann die Heizleistung der Heizvorrichtung durch die Steuerungseinrichtung elektronisch geregelt werden, um die gewünschte Kerntemperatur zu erhalten. Gemäß einer bevorzugten Ausbildungsform der Erfindung weist jedoch jede Transportgondel einen Temperaturfühler, insbesondere Einstich-Temperaturfühler, zum Erfassen der Kerntemperatur der Fleischspeise auf. Mit Hilfe der Temperaturfühler lässt sich die Kerntemperatur jeder der, mitunter sehr unterschiedlichen, Fleischspeisen präzise und vor allem individuell messen. Mit Hilfe der genauen Temperaturwerte lässt sich dann auch die Wärmeabgabe der Heizvorrichtung regeln bzw. optimieren, um die geforderte Kerntemperatur für jede der Fleischspeisen zu erhalten. Die Signale der Temperaturfühler werden dabei mit der Steuerungseinrichtung erfasst, ausgewertet und die Heizleistung entsprechend geregelt.

Die Heizvorrichtung kann mit Hilfe eines einzigen elektrischen Heizstabs oder mehrere Heizstäbe realisiert sein. Diese können von einem z.B. tonnenförmigen oder rohrförmig geformtem Schutzblech bzw. Heizungs-Gehäuse umgeben sein. Der oder die Heizstäbe können zentral zur z.B. kreisförmigen Transportbahn wie auch zentral zum Heizungs-Gehäuse angeordnet sein. Auch können sie entlang der Längserstreckung des Heizungs-Gehäuses, also im Wesentlichen in Horizontalrichtung verlaufen. Bevorzugt sind sie innerhalb des Heizungs-Gehäuses, nahe an der Gehäusewand positioniert und entlang des Umfangs des Heizungs-Gehäuses im Wesentlichen kontinuierlich verteilt. Besonders bevorzugt sind sie an dezidierten Positionen bzw. Bereichen ganz oben, ganz unten, ganz links und ganz rechts lokalisiert. Damit geht der Vorteil einher, dass die entlang der Transportband bewegte Fleischspeise sequentiell an unterschiedlichen Positionen der Transportbahn beheizt wird und zwischen diesen Positionen die Fleischspeise Zeit zum Entspannen hat, sich also die über die Oberfläche eingebrachte Wärmemenge in der Fleischspeise verteilen bzw. ausbreiten kann, bis ein neuerlicher konzentrierter Wärmeeintrag an der nächsten dezidierten Position erfolgt. Insbesondere dann, wenn die frei drehbar gelagerten Transportgondeln zum Einsatz kommen, wird die Fleischspeise auf ihrem Weg entlang der Transportbahn sequentiell mit Pausen zwischen den intensiven Erwärmungsphasen von unterschiedlichen Richtungen her rundum erwärmt. Dies trägt zu einer möglichst homogenen Wärmeverteilung in der Fleischspeise bei. Die optimale Kerntemperatur lässt sich somit relativ genau ansteuern, wobei gleichzeitig die Oberfläche der Fleischspeise geschont wird.

Eine Schonung der Oberfläche der Fleischspeise, also eine Vermeidung von zu ausgeprägter Krustenbildung und unappetitlicher intensiver Bräunung oder gar Blasenbildung ist insbesondere für den Verkauf von Fleischspeisen im Bistro wie auch im Gassenverkauf wichtig, weil dort die Fleischspeise für die Kunden sichtbar in der Warmhaltevorrichtung gelagert sind. Zu diesem Zweck kann die Warmhaltevorrichtung auch Sichtfenster an ihrer Front wie auch ihrer Seite oder ihrer Decke aufweisen.

Das Gehäusematerial des Heizungs-Gehäuses kann aus gut wärmeleitfähigem Metallblech hergestellt sein. Es kann eine geschlossene Fläche bilden, so dass die Heizleistung der Heizstäbe zunächst das Heizungsgehäuse erwärmt und von dort aus dann flächenhaft die Fleischspeise erwärmt wird. Bevorzugt weist das Heizungs-Gehäuse jedoch an den Positionen der Heizstäbe ganz allgemein Öffnungen oder in seiner Längsrichtung (z.B. horizontal) verlaufende Schlitze auf, die besonders bevorzugt korrespondierend zu den Positionen der Heizstäbe lokalisiert sind. Mit der Ausbildung von Öffnungen bzw. Schlitzen geht der Vorteil einher, dass die Wärmeabgabe gut an den Stellen der Öffnungen entlang der Transportbahn lokalisiert erfolgen kann. Während sich die Fleischspeise nach dem Passieren der Öffnungen entlang des geschlossenen Heizungs-Gehäuses, welches die direkte Hitzeeinwirkung hintanhält, jedoch eine flächenhafte wärmende Wirkung hat, weiterbewegt, kann sich die zuvor bei der Öffnung intensiv eingebrachte Wärmemenge in der Fleischspeise ausbreiten, ohne das die Gefahr einer Überhitzung seiner Oberfläche besteht.

Da sich die einzelnen Fleischspeisen rund um die Heizvorrichtung bewegen, also hintereinander an den einzelnen Heizstäben vorbeifahren, kann bei einer Ausbildung mit durch die Steuerungseinrichtung individuell ansteuerbaren Heizstäben oder Gruppen von benachbarten Heizstäben auch eine für jede der Fleischspeisen individuelle Heizleistung eingestellt werden. Die Temperatur der individuellen Heizstäbe oder deren Gruppe ändert sich dann korrespondierend zu der jeweiligen gerade vorbeifahrenden Fleischspeise, bei der ja unter Benutzung der Temperaturfühler und entsprechende Auswertung durch die Steuerungseinrichtung im Wesentlichen kontinuierlich die individuelle Kerntemperatur erfasst wird.

Bei der Bestimmung der Kerntemperatur kann grundsätzlich im Zentrum der Fleischspeise (also im Kern) oder auch an jeder beliebigen Position der Fleischspeise entlang ihrer in Längsrichtung verlaufenden Symmetrieachse gemessen werden. Besonders vorteilhaft ist es jedoch, wenn die Transportgondel und der Temperaturfühler derart ausgebildet und / oder zueinander angeordnet bzw. justiert sind, dass bei mit Hilfe der Transportgondel gehaltener Fleischspeise und in die Fleischspeise eingestochenem Temperaturfühler die Kerntemperatur in jener Zone oder in der Nähe der Zone der Fleischspeise erfassbar ist, die für eine Separierung einer Fleischspeisen-Scheibe von der Fleischspeise relevant ist. Damit lässt sich sicherstellen, dass die unmittelbar in den Verkauf kommende Fleischspeisen-Scheibe die korrekte Kerntemperatur hat und folglich auf sehr zuverlässige Weise die maßgebliche hygienerelevante Rahmenbedingung eingehalten ist. Auch können damit weiter entfernt gelagerte Teile der Fleischspeise, die später zum Verkauf gelangen, auf einer niedrigeren als der gesetzlich geforderten Kerntemperatur gehalten werden, was das Austrocknen der Fleischspeise hintanhält.

Jede Transportgondel kann zur Ablage bzw. zum Tragen der Fleischspeise eine Wanne aufweisen, in welche die Fleischspeise einlegbar ist. Bevorzugt weist jede Transportgondel jedoch mindestens zwei, bevorzugt drei, besonders bevorzugt vier horizontal verlaufende Ablagestäbe zum - insbesondere direkten - darauf Ablegen der Fleischspeise auf. Auf ihnen lässt sich die ziegel-, block-, laib- oder stabförmige Fleischspeise mit möglichst wenig Kontaktfläche ablegen. Dies ist insbesondere bei der Verwendung einer frei drehbar gelagerten Transportgondel von Vorteil, weil dann die möglichst ungestörte weil großflächige Rundumbeheizung der Fleischspeise möglich ist. Mit Hilfe von Stäben, die parallel zur Längserstreckung der z.B. Trommelachse der Heizvorrichtung ausgebildet sind lässt sich die stab- oder stangenförmige Fleischspeise im Wesentlichen entlang ihrer Längserstreckung horizontal gehalten und parallel zur Trommelachse der Heizvorrichtung orientiert transportieren. Auch erlauben die Stäbe ein leichtes Verschieben der Fleischspeise in Längsrichtung (also entlang) der Stäbe, was für das einfache Positionieren der Fleischspeise zwecks Separierung einer Fleischspeisen-Scheibe von Vorteil ist.

Gemäß einem weiteren Aspekt der Erfindung weist jede Transportgondel eine unterhalb der Fleischspeise angeordnete, bevorzugt unabhängig von der Fleischspeise gehaltene, besonders bevorzugt unabhängig von der Fleischspeise aus der Warmhaltevorrichtung herausnehmbare, Abtropftasse auf. Die Abtropftasse dient zum Auffangen von Flüssigkeiten, wie etwa Bratensaft oder Fett, die von der Fleischspeise beim Warmhalten abtropft. Ihre einfache Handhabbarkeit begünstigt ein einfaches und vor allem rasch durchzuführendes Sauberhalten des Inneren der Warmhaltevorrichtung, insbesondre ohne zu diesem Zweck die Fleischspeise entnehmen zu müssen, was entscheidend zur Hygiene beiträgt.

Bevorzugt weist die Wärmevorrichtung eine Bewegungsstufe zum horizontalen Bewegen der Fleischspeise in der Transportgondel zwecks Positionierung der Fleischspeise für die Separierung einer Fleischspeisen-Scheibe mit Hilfe der Schneidervorrichtung auf. Die Bewegungsstufe kann losgelöst von der Transportvorrichtung, insbesondere auch von den Transportgondeln realisiert sein. In dieser Ausbildung kann sie z.B. mit Hilfe eines kranähnlichen Greif-Mechanismus realisiert sein, der die Fleischspeise greift und bewegt. Es kann auch an geeigneter Stelle ein an der hinteren Wand angebrachter Mechanismus ausgefahren werden, der die Fleischspeise von hinten nach vorne bewegt. Besonders bevorzugt weist jedoch jede Transportgondel eine (eigene) Bewegungsstufe auf. Dies kann z.B. so realisiert sein, dass die Fleischspeise mit Hilfe eines in der Transportgondel integrierten Elektromotors nach vorne geschoben wird. Der Elektromotor wirkt über ein Getriebe (z.B. Schneckengetriebe) mit einer Platte zusammen, die an der hinteren Seite der Fleischspeise ansetzt. Der Elektromotor ist so steuerbar bzw. mit einem derart ausgebildeten Getriebe gekoppelt, dass er pro Betriebszyklus die Fleischspeise genau um jene Distanz nach vorne schieben kann, die nötig ist um eine Fleischspeisen-Scheibe der gewünschten Dicke mit Hilfe der Schneidvorrichtung zu separieren. Die Steuerung der Bewegungsstufe erfolgt mit Hilfe der Steuerungseinrichtung.

Mit Hilfe der Steuerungseirichtung lässt sich also die Scheibendicke einstellen, justieren bzw. ändern, wenn dies z.B. auf Grund einer Bestellung nötig sein sollte. Auch lässt sich mit Hilfe der Steuerungseinrichtung nach längerem Warmhalten ohne Separierung einer Fleischspeisen-Scheibe auf automatische Weise eine relativ dünne Scheibe, der sogenannte ausgetrocknete Anschnitt, von der Fleischspeise abtrennen und entsorgen, um die Schnittfläche in einem appetitlichen Zustand zu halten.

Im Vorfeld zu dem Separierungsprozess bewegt - gesteuert durch die Steuerungseinrichtung - die Transportvorrichtung eine selektierte Fleischspeise in eine Separierungsposition. Die Separierungsposition ist bevorzugt im unteren Bereich der Transportbahn, bevorzugt an ihrem tiefsten Punkt, lokalisiert. Weiterhin bevorzugt ist die Schneidevorrichtung oberhalb der Separierungsposition angeordnet. Dann wird die Bewegungsstufe durch Ansteuerung durch die Steuerungseirichtung aktiviert und die Fleischspeise um besagte Dicke in der Gondel bewegt, insbesondere nach vorne geschoben, so dass genau die richtige Dicke der Fleischspeise der Schneidvorrichtung zugänglich ist, insbesondere aus der Gondel herausragt. Danach wird gesteuert durch die Steuerungseinrichtung die automatische Schneidvorrichtung aktiviert und eine Fleischspeisen-Scheibe separier bzw. abgeschnitten. Während der Separierung kippt die Fleischspeisen-Scheibe von der verbleibenden Fleischspeise weg nach unten.

Gemäß einem weiteren Aspekt der Erfindung ist die Schneidevorrichtung am freien Ende der Heizvorrichtung in ihre trommel- bzw. röhrenförmige Struktur - z.B. ihr Gehäuse - integriert und weist insbesondere ein automatisches aus der Struktur herausführbares und in die Struktur einziehbares Messer auf. Damit lässt sich auch das Messer auf einer für die Ansiedlung von Keimen ungünstigen bzw. diese vermeidenden Temperatur halten, was einen erheblichen Beitrag zur Hygiene liefert. Besonders bevorzugt weist die Schneidevorrichtung auch eine automatische Reinigungseinrichtung auf, die beim Ein- bzw. Ausfahren des Messers das Messer von Schneiderückständen befreit, ggf. auch sterilisiert.

Die Schneidervorrichtung kann jedoch auch separiert von der Heizvorrichtung angeordnet sein. Auch kann sie zwei separate Messer aufweisen, um auf ethnische Aspekte der Ernährung Rücksicht zu nehmen. So kann eines der Messer für Schweinefleisch und das andere Messer für Huhn und Rind verwendet werden.

Die Schneidervorrichtung kann auch eine automatische Schleifstufe zum Schärfen eines Messers aufweisen.

Gemäß einem weiteren Aspekt der Erfindung ist die Warmhaltevorrichtung dazu ausgebildet, die Separierung der Fleischspeisen-Scheibe von einer selektierten Fleischspeisen zu unterbinden, solange die Kerntemperatur besagter Fleischspeise unterhalb eines definierten Werts (z.B. 65° Celsius) liegt. Damit lässt sich sicherstellen, dass keine zu kühle und daher nicht den Hygienevorschriften entsprechende Fleischspeisen-Scheibe an Kunden ausgeliefert wird. Die Überwachung der gemessenen Temperatur sowie temperaturabhängige Funktionsfreischaltung oder Blockade der Schneidevorrichtung erfolgt mit Hilfe der elektronischen Steuerungseinrichtung, die Ihre Eingangssignale direkt von einem Thermometer, das mit besagten Temperaturfühler gekoppelt ist, erhält. Optional können auch die Temperaturfühler direkt als Signalquellen dienen und die Steuerungseinrichtung zum Verarbeiten der von den Temperaturfühlern erhaltenen Signale ausgebildet sein.

Die mit Hilfe der Schneidevorrichtung separierte Fleischspeisen-Scheibe kann in einer unterhalb der Separierungsposition angeordneten Tasse zur weiteren manuellen Entnahme durch das Personal aufgefangen werden. Dort können auch mehrere solcher Scheiben, insbesondere wenn es sich um die gleiche Art der Fleischspeisen handelt, kurzzeitig abgelegt, bzw. übereinander gestapelt werden. Auch kann ein Drehteller oder ähnliches vorhanden sein, bei dem separate Ablege-Sektionen zur Ablage von Fleischspeisen-Scheiben unterschiedlicher Art vorgehen sind, wobei die Selektierung der richtigen Ablage-Sektion mit Hilfe der Steuerungseinrichtung erfolgt.

Bevorzugt kann die Warmhaltevorrichtung jedoch auch eine, insbesondere automatische, Brötchenbefüllung-Stufe zum Befüllen bzw. Belegen von einem Brötchen, wie etwa einer Semmel, mit der separierten Fleischspeisen-Scheibe aufweisen. Auch diese Brötchenbefüllung-Stufe wird von der zuvor erwähnten Steuerungseinrichtung elektronisch gesteuert. Sie ist zum automatischen, sequentiellen Zuführen von zunächst einem Brötchenunterteil zwecks Ablage von einer von der Fleischspeise separierte Fleischspeisen-Scheibe auf dem Brötchenunterteil und nachfolgend einem Brötchenoberteil zum Bedecken der auf dem Brötchenunterteil abgelegten Fleischspeisen-Scheibe ausgebildet. Somit lässt sich mit Hilfe der Warmhaltevorrichtung nicht nur automatisch eine Fleischspeisen-Scheibe von einer selektierten Fleischspeise separieren bzw. abschneiden, sondern gleich ein belegtes bzw. gefülltes Brötchen herstellen. In dieser Ausbildungsform realisiert die Warmhaltevorrichtung eine vollautomatische Herstellungsvorrichtung zum Herstellen von belegten Brötchen, wie z.B. von Leberkäsesemmeln. Das Zuführen der Brötchenteile kann z.B. mit einem automatischen Schwenkarm mit Greifer an seinem Ende erfolgen, der gesteuert durch die Steuerungseinrichtung das jeweilige Brötchenteil greift und von einer Ausgangsposition hin zu einer Ablageposition bewegt und dort ablegt.

Dabei hat es sich als besonders vorteilhaft erwiesen, wenn die Brötchenbefüllung-Stufe einen - zwecks Abgabe von Brötchen oder Teilen davon verschwenkbaren oder verschiebbaren - Brötchenspeicher aufweist und zum automatischen Entnehmen einzelner Brötchen oder Teile davon ausgebildet ist. Besonders vorteilhaft ist es, wenn der Brötchenspeicher und/oder die Warmhaltevorrichtung so ausgebildet ist, dass der Brötchenspeicher austauschbar ist, also der Brötchenspeicher als austauschbares Magazin ausgebildet ist. Damit geht der Vorteil einher, dass die Brötchen außerhalb der Warmhaltevorrichtung vom Personal eingelegt werden können, also z.B. die Türe der Warmhaltevorrichtung nicht unnötig geöffnet werden muss, was zur Temperaturstabilisierung in der Warmhaltevorrichtung entscheidend beiträgt. Die Brötchen können als Ganzes in den Brötchenspeicher eingelegt werden, wenn eine automatische Zerteilungsvorrichtung zum Zerteilen der Brötchen in Brötchenoberteil und Brötchenunterteil vorgesehen ist. Andernfalls müssen vorgeschnittene Brötchen in den Brötchenspeicher eingelegt werden. Die Brötchen sind an der Unterseite des Brötchenspeichers entnehmbar und rutsche von oben nach unten unter Einwirkung der Schwerkraft nach.

Auch kann in die Wand des Brötchenspeichers ein Sichtfenster integriert sein, mit dessen Hilfe das Personal die Anzahl der im Brötchenspeicher enthaltenen Brötchen wie auch deren Lage visuell kontrollieren kann. Bevorzugt ist der Brötchenspeicher länglich, z.B. röhrenförmig ausgebildet und das Sichtfenster erstreckt sich entlang seiner gesamten Länge. Durch die Integration des Brötchenspeichers in die Warmhaltevorrichtung ist nicht nur eine Vereinfachung der Handhabung, sondern auch eine Verbesserung der Qualität erhalten, da die fertiggestellten, also befüllten Brötchen mit Hilfe der in der Warmhaltevorrichtung herrschenden Temperatur im warmen Zustand ausgeliefert werden können.

Gemäß einem weiteren Aspekt der Erfindung kann die Warmhaltevorrichtung eine Brötchenabgabe-Vorrichtung aufweisen. Mit ihrer Hilfe kann jedes hergestellte Brötchen aus der Warmhaltevorrichtung entnommen werden. Sie kann z.B. mit Hilfe eines automatischen Fördermechanismus aufweisend z.B. ein Förderband realisiert sein. Bevorzugt ist sie jedoch als Zwischenspeicher zur Zwischenspeicherung von einer Anzahl von fertiggestellten befüllten Brötchen ausgebildet. So kann das Förderband z.B. so dimensioniert sein, dass eine Anzahl von fertigen Brötchen hintereinander darauf Platz findet. Auch kann die Brötchenabgabe-Vorrichtung mit Hilfe einer über eine Art Rutsche zu erreichende Ablagefläche realisiert sein, in welche die fertig gestellten Brötchen automatisch hineinbefördert werden und dort bis zur manuellen Entnahme ruhen. Besonders bevorzugt ist der Zwischenspeicher als Drehteller zur Aufnahme einer Anzahl von fertiggestellten Brötchen ausgebildet. So kann zunächst eine Brötchen in einem Sektor des Drehtellers wie vorangehend erörtert hergestellt werden. Danach dreht sich der Drehteller um einen Sektor weiter und es wird das nächste Brötchen im nächsten freien Sektor hergestellt, usw. Insbesondre im Bistrobetrieb einer Tankstelle hat es ich als besonders vorteilhaft erwiesen, wenn der Drehteller so dimensioniert ist, das er vier Sektor zur Aufnahme von vier fertigen Brötchen aufweist, weil dies die übliche maximale Anzahl an Brötchen ist, die laut Erfahrungswert von einem Kunden geordert wird. Die Herstellung der bestellten Menge an Brötchen erfolgt vollautomatisch und benötigt folglich keinen manuellen Eingriff, so dass die Ressourcen des Personals für weitere verkaufsfördernde Kommunikation mit dem Kunden frei bleiben.

Gemäß einem weiteren Aspekt der Erfindung kann die Warmhaltevorrichtung auch eine automatische Beschwadungsstufe mit Wassertank aufweisen, um die Fleischspeisen bzw. auch die Brötchen mit Feuchtigkeit zu versorgen und ein zu rasches Austrocknen hintanzuhalten. So können die Düsen im Heizungsgehäuse nach unten gerichtet integriert sein, um eine Beschwadung von oben nach unten zu ermöglichen, und der Wassertank von außen an das Gehäuses der Warmhaltevorrichtung ankoppelbar sein.

Gemäß einem weiteren Aspekt der Erfindung kann die Warmhaltevorrichtung mit Hilfe ihrer Steuerungseinrichtung ein Zählwerk realisieren, mit dessen Hilfe die Anzahl der hergestellten belegten Brötchen erfassbar ist und ggf. eine Aktion auslösbar ist, wie z.B. ein Freibrötchen je 100 hergestellter belegter Brötchen.

Zusammenfassend ist der gesamte Herstellungsprozess wesentlich vereinfacht und sicherer gestaltet. Die Brötchenherstellung geht dabei relativ rasch und hygienisch von statten. Die hergestellten belegten Brötchen weisen gleichmäßige Merkmale auf, wie z.B. Temperatur und Schnittdicke der Fleischspeisen-Scheide. Auch sind die gesamten Parameter des Herstellungsprozesses besser kontrollierbar bzw. einstellbar.

Im operativen, automatischen Betrieb der Warmhaltevorrichtung kann z.B. über eine Bedienelement die gewünschte Fleischspeisen durch das Personal selektiert werden. Daraufhin schwenkt der Brötchenspeicher über den Teller und ein Brötchenunterteil wird freigegeben und fällt auf den Teller und der Brötchenspeicher schwenkt wieder zurück. Die Transportvorrichtung transportiert die selektierte Fleischspeise in die Separierungsposition bis unter das automatisch Messer. Mit Hilfe des elektrisch verstellbaren Schneckengetriebes wird die selektierte Fleischspeisen nun in die optimale Schnittposition verschoben. Danach trennt das Messer eine Scheibe der Fleischspeise ab, die auf das Brötchenunterteil fällt. Das Messer wird wieder eingezogen und gereinigt. Der Brötchenspeicher schwenkt wieder über den Teller und gibt das Brötchenoberteil frei, das auf die zuvor abgetrennte und auf der Brötchenunterseite abgelegte Fleischspeisen-Scheibe fällt. Danach schwenkt er wieder zurück und das belegte Brötchen ist fertig.

Dabei hat es sich als besonders vorteilhaft erweisen, dass die Lebensmittel, insbesondere die Fleischspeisen nur ein einziges Mal beim Einlegen in die Wärmevorrichtung angegriffen werden müssen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1A: eine erste Ansicht einer erfindungsgemäßen Warmhaltevorrichtung;
- Fig. 1B: eine zweite Ansicht der Warmhaltevorrichtung gemäß Fig. 1 ;
- Fig. 2: ein Detail der Warmhaltevorrichtung betreffend eine Abtropftasse;
- Fig. 3-5: eine Betriebssequenzen zur automatischen Herstellung eines belegten Brötchens mit Hilfe besagter Warmhaltevorrichtung.

### Beschreibung der Ausführungsbeispiele

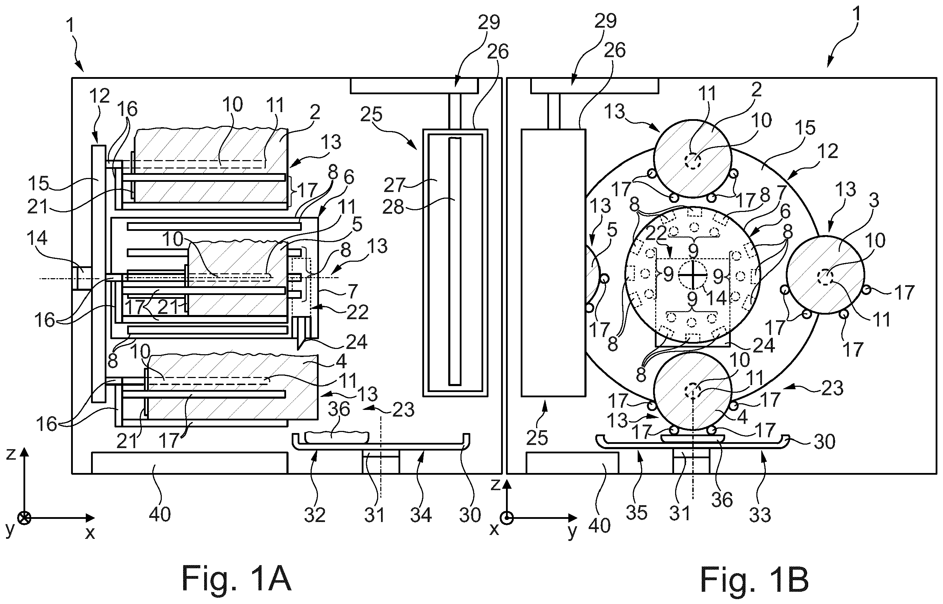

In den Figuren 1A und 1B ist eine erfindungsgemäße Warmhaltevorrichtung 1, nachfolgend kurz Vorrichtung 1 genannt, dargestellt. Sie ist zum Warmhalten von vier Fleischspeisen 2, 3, 4 und 5 ausgebildet, wobei es sich im vorliegenden Fall um zwei normale Leberkäse 2 bzw. 3 sowie um einen pikanten Leberkäse 4 und einen Käse-Leberkäse 5 handelt. Sie ist auch zum automatischen Herstellen eines belegten Brötchens ausgebildet, wobei von der jeweiligen Fischspeise 2-5 eine Fleischspeisen-Scheibe separiert bzw. abgeschnitten wird.

In den Figuren 1A und 1B ist auch ein kartesisches Koordinatensystem eingezeichnet, wobei im vorliegenden Fall bezogen auf die Warmhaltevorrichtung 1 die X-Richtung von hinten nach vorne, die Y-Richtung von links nach rechts und die Z-Richtung von unten nach oben verläuft.

Die Warmhaltevorrichtung 1 weist eine elektronische Steuerungseinrichtung 40 auf, die dazu ausgebildet ist, die verschiedensten Funktionen (z.B. Heizen, Transportieren, Schneiden) der Vorrichtung automatisch zu steuern. Zu diesem Zweck ist sie mit unterschiedlichen Sensoren wie auch elektrischen Motoren verbunden und weist auch eine Anzeige und eine Interface zur digitalen Kommunikation mit externen Geräten auf, worauf jedoch aus Gründen der Übersichtlichkeit in den Figuren nicht weiter eingegangen ist.

Die Vorrichtung 1 weist auch eine Heizvorrichtung 6 zum geregelten Abgeben von Wärme für das Warmhalten der separaten Fleischspeisen 2-5 auf. Die Heizvorrichtung 6 weist ein trommelartiges Heizungsgehäuse 7 auf, das zum Beispiel an seinem linken oder rechten Ende (siehe Fig. 1A) gehalten bzw. getragen wird, was jedoch in den Figuren 1A und 1B aus Gründen der Übersichtlichkeit nicht dargestellt ist. Das Heizungsgehäuse 7 weist gruppierte Gehäuseöffnungen 8 auf, die oben, unten, sowie links und rechts lokalisiert sind. Korrespondierend zu den Gehäuseöffnungen 8 sind innerhalb des Heizungsgehäuses 7 Heizstäbe 9 angeordnet, die in Längsrichtung des Heizungsgehäuses 7 entlang der Gehäuseöffnungen 8 verlaufen. Die Heizleistung der Heizstäbe 9 wird mit Hilfe der Steuerungseinrichtung 40 geregelt, wobei in die Fleischspeisen 2-5 eingesetzte Einstich-Temperaturfühler 10 zum Einsatz kommen, die mit der Steuerungseinrichtung 40 verbunden (kabelgebunden oder über Funksignale) sind. Diese Temperaturfühler 10 weisen eine konstante Länge auf und ihre temperaturempfindliche Spitze 11 ist so positioniert, dass sie in der Nähe jener Zone liegt, die für die nächste Separation von der jeweiligen Fleischspeise 2-5 vorgesehen ist. Damit wird die Kerntemperatur dieser, für den unmittelbaren Verkauf vorgesehenen bzw. relevanten Zone der Fleischspeise 2-5 gemessen und die Heizleistung derart geregelt, dass diese Zone eine optimale Temperatur von mindestens 65 °C aufweist.

Die Warmhaltevorrichtung 1 weist zudem eine Transportvorrichtung 12 zum separaten transportieren jeder der Fleischspeisen 2-5 rund um die stationär platzierte Heizvorrichtung 6 auf. Zu diesem Zweck sind vier separate Transportgondeln 13 vorgesehen, die an einer zentral gelagerten und dort mit einem ersten Elektromotor 14 angetriebenen kreisrunden Metallscheibe 15 frei drehbar (z.B. mit Hilfe eines entsprechend ausgebildeten Lagerns) befestigt sind. Die Gondeln 13 behalten folglich bei der Drehbewegung der Metallscheibe 15 ihre Orientierung in Bezug auf die Schwerkraft (entgegen der Z-Richtung) bei. Somit wird die in jeder Gondel 13 gehaltene Fleischspeise 2-5 entlang der sich dabei in einer horizontalen Ebene einstellenden kreisförmigen Transportbahn zu unterschiedlichen Zeiten von unterschiedlichen Richtungen her erwärmt.

Jede der Gondeln 13 ist wie in der Figur 1A ersichtlich an ihrem linken Ende mit Hilfe eines Gestänges 16 wie erwähnt frei drehbar mit der Metallscheibe 15 verbunden. Um die jeweilige Fleischspeise 2-5 zu tragen, weist jede Gondel 13 vier Ablagestäbe 17 auf, von denen jeweils die unteren beiden die Fleischspeise 2-5 von unter der Unterstützung und die beiden seitlichen Ablagestäbe 17 die Fleischspeise 2-5 von der Seite her gegen Kippen sichern. Die Ablagestäbe 17 sind mit dem Gestänge 16 verbunden.

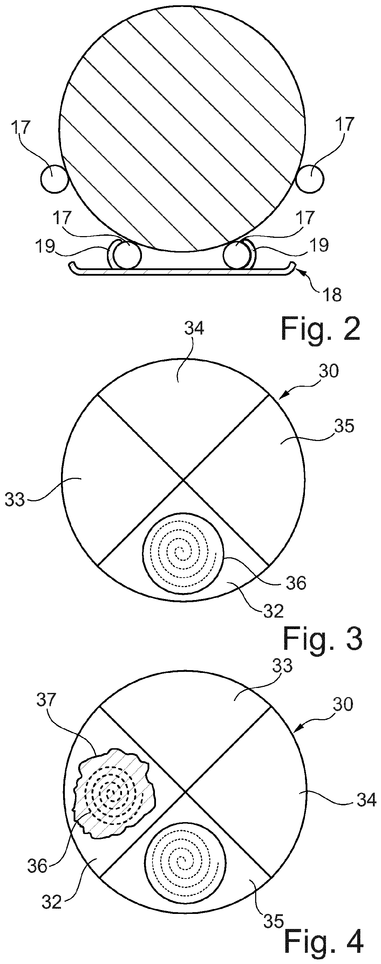

Jede der Gondeln 13 weist auch eine Abtropftasse 18 auf, die jedoch in den Figuren 1A und 1B aus Gründen der Übersichtlichkeit nicht dargestellt sind. Die in der Fig. 2 abgebildete Abtropftasse 18 ist mit Befestigungspangen 19 versehen, die mit den beiden unteren Metallstäben 17 zusammenwirken und die Abtropftasse 18 daran leicht lösbar befestigen.

Jede der Gondeln 13 weist auch eine separate Bewegungsstufe 20 auf, die zum horizontalen bewegen der jeweiligen Fleischspeise 2-5 in der Gondel, insbesondere zum (wie in der Figur 1A dargestellt) nach rechts aus der Gondel Herausschieben ausgebildet ist. Die betreffende Fleischspeise 4 wird dabei um jene Länge aus der Gondel 13 heraus geschoben, die von ihr abgeschnitten werden soll. Aus Gründen der Übersichtlichkeit ist in der Figur 1A nur eine Platte 21 dargestellt, die von einem nicht dargestellten Elektromotor gekoppelt mit einem entsprechenden Getriebe angetrieben wird.

Um besagten Separierungsvorgang auszuführen, weist die Vorrichtung 1 auch eine automatische Schneidevorrichtung 22 auf. Sie wird mithilfe der Steuerungseinrichtung 40 angesteuert und erlaubt das automatische Separieren einer Fleischspeise-Scheibe von einer mit Hilfe der Transportvorrichtung 12 an eine Separierungsposition 23 positionierten Fleischspeise 2-5. Die Separierungsposition 23 ist die am weitesten unten gelegene Position, welche eine Fleischspeise 2-5 entlang ihrer Transportbahn einnehmen kann. Die Schneidevorrichtung 22 ist in den äußeren, in der Figur 1A rechts lokalisierten Teil des Heizungsgehäuses an dessen Unterseite integriert. An dieser Position kann aus der Schneidevorrichtung 22 ein Messer 24 aus- und eingefahren werden.

Die Vorrichtung 1 weist weiterhin eine Brötchenbefüllung-Stufe 25 auf, deren Funktionen mit Hilfe der Steuerungseinrichtung 40 gesteuert werden. Die Brötchenbefüllung-Stufe 25 weist einen schwenkbar bzw. verschiebbar gelagerten Brötchenspeicher 26 auf, der an einer Seite eine Türe 27 zum Einlegen von Brötchen mit einem integrierten Sichtfenster 28 zur visuellen Kontrolle hat. Der Brötchenspeicher 26 lässt sich mit Hilfe seines Bewegungsmechanismus 29, der an der Oberseite der Vorrichtung angebracht ist, von einem darin integrierten, jedoch nicht dargestellten, weiteren elektrischen Motor von seiner Ruheposition (wie in der Figur 1A und 1B dargestellt) in eine Spenderposition oberhalb von einem Drehteller 30 bewegen. Der Brötchenspeicher 26 ist auch zum separaten Abgeben von in ihm hintereinander gespeicherten Brötchenuntereilen und Brötchenoberteilen ausgebildet. Ist der Brötchenspeicher 26 von der Vorrichtung 1 entnommen, können die in besagte Teile vorgeschnittene Bötchen manuell eingelegt werden.

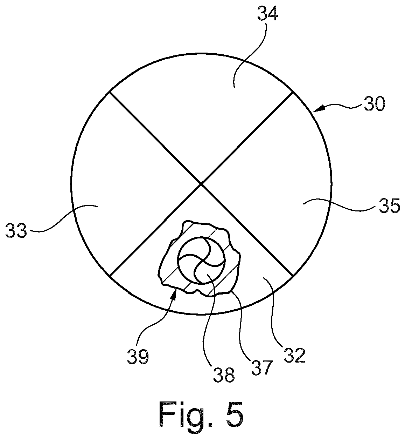

Ebenfalls Bestandteil der Brötchenbefüllung-Stufe 25 ist besagter, an der Unterseite der Vorrichtung 1 lokalisierter und mit einem weiteren Elektromotor 31 antreibbarer Drehteller 30, auf dem die belegten Brötchen wie nachfolgend erörtert hergestellt werden, wobei auf die Figuren 3-5 verweisen ist.

In Figur 3 ist der Drehteller 30 dargestellt, der vier Sektionen 32-35 aufweist. Zunächst wird der Brötchenspeicher 26 in seine Spenderposition oberhalb der Sektion 32 bewegt, was nicht visualisiert ist. Dort gibt er ein Brötchenunterteil 36, das auch in den Fig. 1A und 1B dargestellt ist, an den Drehteller 30 ab.

Der Drehteller 30 wird daraufhin um 90 Grad im Uhrzeigersinn bis unter die Separierungsposition 23 bewegt. Dort angekommen, wird das Messer 24 aktiviert, das eine Fleischspeisen-Scheibe 37 der Fleischspeise 4 abtrennt, die dabei auf das Brötchenunterteil 36 herabkippt. Das mit der Fleischspeisen-Scheibe 37 abgedeckte Brötchenunterteil 36 ist in der Figur 4 dargestellt.

Danach wird der Drehteller 30 um 90 Grad gegen den Uhrzeigersinn gedreht bis der Sektor 32 wieder unter dem Brötchenspeicher 26 lokalisiert ist. Dort angekommen gibt der Brötchenspeicher 26 ein Brötchenoberteil 38 ab, welches auf der zuvor abgeschnittenen Fleischspeisen-Scheibe 37 zu liegen kommt. Danach kann der Brötchenspeicher 26 wieder in seine Ruheposition gefahren werden und das fertig gestellte belegte Brötchen 39 manuell entnommen werden.

Sollen gleichzeitig mehrere belegte Brötchen hergestellt werden, verharrt der Brötchenspeicher 26 einfach in seiner Spenderposition, der Drehteller 30 wird um weitere 90 Grad gedreht, sodass ein freier Sektor unter ihm positioniert wird und der zuvor beschreiben Prozess wird neuerlich durchlaufen. Da der Drehteller 30 vier Sektoren aufweist, können somit maximal vier belegte Brötchen 39 in einem Arbeitszyklus hergestellt werden.

Es versteht sich daher von selbst, dass mit einem Drehteller, der mehr als vier Sektoren aufweist auch mehr belegte Brötchen in einem Arbeitszyklus hergestellt werden können.

## Patentansprüche

1. Warmhaltevorrichtung (1), insbesondere Bistro-Warmhaltevorrichtung, aufweisend
-) eine Heizvorrichtung (6) zum geregelten Abgeben von Wärme für das Warmhalten von separaten Fleischspeisen (2-5), wobei die Heizvorrichtung (6) zum automatischen Regeln ihrer Heizleistung in Abhängigkeit von gemessenen Kerntemperaturen der Fleischspeisen (2-5) ausgebildet ist, und
-) eine Transportvorrichtung (12) zum separaten Transportieren jeder der Fleischspeisen (2-5) entlang einer geschlossen Transportbahn rund um die Heizvorrichtung (6) herum und zum automatischen Positionieren einer der Fleischspeisen (2-5) an einer Separierungsposition (23) der Transportbahn, und
-) eine Schneidevorrichtung (22) zum automatischen Separieren einer Fleischspeisen-Scheibe (37) von einer mit Hilfe der Transportvorrichtung (12) an besagter Separierungsposition (23) positionierten Fleischspeise (2-5).

2. Warmhaltevorrichtung (1) nach Anspruch 1, wobei die Transportbahn in einer im Wesentlichen vertikal orientierten Ebene verläuft, und sich
die Heizvorrichtung (6) röhren oder trommelartig in horizontaler Richtung innerhalb der Transportbahn erstreckt.

3. Warmhaltevorrichtung (1) nach einem der vorangehenden Ansprüche, wobei die Transportvorrichtung (12) für jede Fleischspeise (2-5) separat ausgebildete Transportgondeln (13) aufweist.

4. Warmhaltevorrichtung (1) nach Anspruch 3, wobei jede der Transportgondeln (13) derart ausgebildet und / oder gelagert ist, dass die darin aufgenommene Fleischspeise (2-5) entlang der Transportbahn ihre Orientierung in Bezug auf die Richtung der Schwerkraft beibehält.

5. Warmhaltevorrichtung (1) nach einem der Ansprüche 3 - 4, wobei jede Transportgondel einen Temperaturfühler (10), insbesondere Einstich-Temperaturfühler, zum Erfassen der Kerntemperatur der Fleischspeise (2-5) aufweist.

6. Warmhaltevorrichtung (1) nach Anspruch 5, wobei die Transportgondel (13) und der Temperaturfühler (10) derart ausgebildet und / oder zueinander angeordnet bzw. justiert sind, dass bei mit Hilfe der Transportgondel (13) gehaltener Fleischspeise (2-5) und in die Fleischspeise (2-5) eingestochenem Temperaturfühler (10) die Kerntemperatur in jener Zone oder in der Nähe der Zone der Fleischspeise (2-5) erfassbar ist, die für eine Separierung einer Fleischspeisen-Scheibe (37) von der Fleischspeise (2-5) relevant ist.

7. Warmhaltevorrichtung (1) nach einem der vorangehenden Ansprüche 3 - 6, wobei jede Transportgondel (13) mindestens zwei, bevorzugt drei, besonders bevorzugt vier horizontal verlaufenden Ablagestäbe (17) zum darauf Ablegen der Fleischspeise (2-5) aufweist.

8. Warmhaltevorrichtung (1) nach einem der vorangehenden Ansprüche 3 bis 7, wobei jede Transportgondel (13) eine unterhalb der Fleischspeise (2-5) angeordnete, bevorzugt unabhängig von der Fleischspeise (2-5) gehaltene, besonders bevorzugt unabhängig von der Fleischspeise aus der Warmhaltevorrichtung herausnehmbare, Abtropftasse (18) aufweist.

9. Warmhaltevorrichtung (1) nach einem der vorangehenden Ansprüche 3- 8, aufweisend eine Bewegungsstufe (20) zum horizontalen Bewegen der Fleischspeise (2-5) in der Transportgondel zwecks Positionierung der Fleischspeise für die Separierung einer Fleischspeisen-Scheibe mit Hilfe der Schneidervorrichtung (22).

10. Warmhaltevorrichtung (1) nach Anspruch 9, wobei jede Transportgondel (13) eine Bewegungsstufe (20) aufweist.

11. Warmhaltevorrichtung (1) nach einem der vorangehenden Ansprüche, wobei die Schneidevorrichtung (22) am freien Ende der Heizvorrichtung (6) in ihre trommel- bzw. röhrenförmige Struktur integriert ist und insbesondere ein automatisches aus der Struktur herausführbares und wieder in die Struktur einziehbares Messer (24) aufweist.

12. Warmhaltevorrichtung (1) nach einem der vorangehenden Ansprüche, die dazu ausgebildet ist, die Separierung der Fleischspeisen-Scheibe (37) von einer selektierten Fleischspeise zu unterbinden, solange die Kerntemperatur besagter Fleischspeise (2-5) unterhalb eines definierten Werts liegt.

13. Warmhaltevorrichtung (1) nach einem der vorangehenden Ansprüche, aufweisend eine Brötchenbefüllung-Stufe (25) ausgebildet zum sequentiellen Zuführen von
-) zunächst einem Brötchenunterteil (36) zwecks Ablage von einer von der Fleischspeise (2-5) separierte Fleischspeisen-Scheib (37) und
-) nachfolgend einem Brötchenoberteil (38) zum Bedecken der auf dem Brötchenunterteil (37) abgelegten Fleischspeisen-Scheibe (37).

14. Warmhaltevorrichtung (1) nach Anspruch 13, wobei die Brötchenbefüllung-Stufe (25) einen Brötchenspeicher (26) aufweist und zum automatischen Entnehmen einzelner Brötchen oder Teile (36, 38) davon ausgebildet ist.

15. Warmhaltevorrichtung (1) nach einem der Ansprüche 13 - 14, aufweisend eine Brötchenabgabe-Vorrichtung, bevorzugt ausgebildet als Zwischenspeicher zur Zwischenspeicherung von einer Anzahl von fertiggestellten befüllten Brötchen (39), besonders bevorzugt ausgebildet als Drehteller (30) zur Aufnahme einer Anzahl von, wie beispielsweise vier, fertiggestellten Brötchen (39).

## Claims

1. A warming device (1), in particular a bistro warming device, comprising
-) a heating device (6) for the regulated emission of heat for keeping warm separate meat foodstuffs (2-5), wherein the heating device (6) is arranged to regulate the heating output thereof automatically depending on measured core temperatures of the meat foodstuffs (2-5), and
-) a transporting device (12) for separately transporting each of the meat foodstuffs (2-5) along a closed transport path around the heating device (6) and for automatically positioning one of the meat foodstuffs (2-5) in a separation position (23) of the transport path, and
-) a cutting device (22) for automatically separating a meat foodstuff slice (37) from a meat foodstuff (2-5) positioned in the said separation position (23) with the aid of the transporting device (12).

2. The warming device (1) according to Claim 1, wherein the transport path runs in a substantially vertically oriented plane, and the heating device (6) extends in a tubular or drum-like manner in a horizontal direction within the transport path.

3. The warming device (1) according to any one of the preceding claims, wherein the transporting device (12) comprises separate transporting gondolas (13) for each meat foodstuff (2-5).

4. The warming device (1) according to Claim 3, wherein each of the transporting gondolas (13) is designed and/or mounted such that the meat foodstuff (2-5) held therein maintains its orientation in relation to the direction of gravity along the transport path.

5. The warming device (1) according to one of Claims 3-4, wherein each transporting gondola comprises a temperature sensor (10), in particular a probe temperature sensor, for detecting the core temperature of the meat foodstuff (2-5).

6. The warming device (1) according to Claim 5, wherein the transporting gondola (13) and the temperature sensor (10) are designed and/or arranged relative to each other and adjusted such that, when meat foodstuff (2-5) is held in the transporting gondola (13) and the temperature sensor (10) is inserted into the meat foodstuff (2-5), the core temperature can be detected in or in the vicinity of the zone of the meat foodstuff (2-5) which is relevant for separation of a meat foodstuff slice (37) from the meat foodstuff (2-5).

7. The warming device (1) according to any one of the preceding Claims 3-6, wherein each transporting gondola (13) comprises at least two, preferably three, particularly preferably four, horizontal rest bars (17) for depositing thereon the meat foodstuff (2-5).

8. The warming device (1) according to any one of the preceding Claims 3 to 7, wherein each transporting gondola (13) comprises a drip tray (18) which is arranged underneath the meat foodstuff (2-5), is preferably held independently of the meat foodstuff (2-5) and particularly preferably can be removed from the device for keeping food warm independently of the meat foodstuff.

9. The warming device (1) according to any one of the preceding Claims 3-8, comprising a movement stage (20) for horizontally moving the meat foodstuff (2-5) in the transporting gondola for the purpose of positioning the meat foodstuff for separation of a meat foodstuff slice with the aid of the cutting device (22).

10. The warming device (1) according to Claim 9, wherein each transporting gondola (13) comprises a movement stage (20).

11. The warming device (1) according to any one of the preceding claims, wherein the cutting device (22) is integrated into the drum-like or tubular structure of the heating device (6) at the free end of same and in particular comprises an automatic blade (24) which can be extended from the structure and retracted back into the structure.

12. The warming device (1) according to any one of the preceding claims, which is arranged to prevent separation of the meat foodstuff slice (37) from a selected meat foodstuff as along as the core temperature of said meat foodstuff (2-5) is below a defined value.

13. The warming device (1) according to any one of the preceding claims, comprising a bread roll filling stage (25) adapted for the sequential supply of
-) first a bread roll lower part (36) for the purpose of placing thereon a meat foodstuff slice (37) separated from the meat foodstuff (2-5), and
-) subsequently a bread roll upper part (38) for covering the meat foodstuff slice (3) placed on the bread roll lower part (37).

14. The warming device (1) according to Claim 13, wherein the bread roll filling stage (25) comprises a bread roll store (26) and is arranged to remove individual bread rolls or parts (36, 38) thereof automatically.

15. The warming device (1) according to one of Claims 13-14, comprising a bread roll dispensing device, preferably in the form of a temporary store for temporarily storing a number of finished filled bread rolls (39), particularly preferably in the form of a turntable (30) for holding a number of, for example four, finished bread rolls (39).

## Revendications

1. Dispositif de maintien au chaud (1), notamment dispositif de maintien au chaud pour bistrot, comportant
-) un dispositif de chauffage (6) pour une délivrance régulée de chaleur pour le maintien au chaud de plats de viande séparés (2-5), le dispositif de chauffage (6) étant constitué pour la régulation automatique de sa puissance calorifique en fonction des températures à coeur mesurées des plats de viande (2-5), et
-) un dispositif de transport (12) pour le transport séparé de chacun des plats de viande le long d'une piste de transport fermée autour du dispositif de chauffage (6) et pour le positionnement automatique d'un des plats de viande (2-5) à une position de séparation (23) de la piste de transport, et
-) un dispositif de découpe (22) pour la séparation automatique d'une tranche de plat de viande (37) d'un plat de viande (2-5) positionné à l'aide du dispositif de transport (12) à ladite position de séparation (23).

2. Dispositif de maintien au chaud (1) selon la revendication 1, la piste de transport passant dans un plan orienté pour l'essentiel verticalement et le dispositif de chauffage (6) s'étendant de manière tubulaire ou de tambour en direction horizontale à l'intérieur de la piste de transport.

3. Dispositif de maintien au chaud (1) selon l'une quelconque des revendications précédentes, le dispositif de transport (12) comportant pour chaque plat de viande (2-5) des nacelles constituées séparément (13).

4. Dispositif de maintien au chaud (1) selon la revendication 3, chacune des nacelles de transport (13) étant constituée et/ou logée de telle manière que le plat de viande (2-5) logé dedans conserve le long de la piste de transport son orientation par rapport à la direction de la force de gravité.

5. Dispositif de maintien au chaud (1) selon l'une quelconque des revendications 3-4, chaque nacelle de transport comportant une sonde de température (10), notamment une sonde de température piquée, pour saisir la température à coeur du plat de viande (2-5).

6. Dispositif de maintien au chaud (1) selon la revendication 5, les nacelles de transport (13) et la sonde de température (10) étant constituées et/ou disposées l'une par rapport à l'autre ou ajustées de telle manière que la température à coeur peut être saisie dans cette zone là ou à proximité de la zone du plat de viande (2-5) pour le plat de viande (2-5) maintenu à l'aide de la nacelle de transport (13) et de la sonde de température (10) piquée dans le plat de viande (2-5), qui est déterminante pour une séparation d'une tranche de plat de viande (37) du plat de viande (2-5).

7. Dispositif de maintien au chaud (1) selon l'une quelconque des revendications précédentes 3-6, chaque nacelle de transport (13) comportant au moins deux, de préférence trois, de préférence notamment quatre barrettes de dépose (17) passant horizontalement pour déposer dessus le plat de viande (2-5).

8. Dispositif de maintien au chaud (1) selon l'une quelconque des revendications précédentes 3-7, chaque nacelle de transport (13) comportant un plateau d'égouttage (18) disposé en dessous du plat de viande (2-5), maintenu de préférence indépendamment du plat de viande (2-5), pouvant être enlevé du dispositif de maintien au chaud de préférence notamment indépendamment du plat de viande.

9. Dispositif de maintien au chaud (1) selon l'une quelconque des revendications précédentes 3-8, comportant un niveau de mouvement (20) pour le déplacement horizontal du plat de viande (2-5) dans la nacelle de transport dans le but de positionner le plat de viande pour la séparation d'une tranche de plat de viande à l'aide du dispositif de découpe (22).

10. Dispositif de maintien au chaud (1) selon la revendication 9, chaque nacelle de transport (13) comportant un niveau de déplacement (20).

11. Dispositif de maintien au chaud (1) selon l'une quelconque des revendications précédentes, le dispositif de découpe (22) étant intégré sur une extrémité libre du dispositif de chauffage (6) dans sa structure de type tambour ou tubulaire et comportant notamment un couteau (24) pouvant être automatiquement enlevé de la structure et introduit à nouveau dans la structure.

12. Dispositif de maintien au chaud (1) selon l'une quelconque des revendications précédentes, qui est constitué à cet effet pour faire cesser la séparation de la tranche de plat de viande (37) d'un plat de viande sélectionné tant que la température à coeur dudit plat de viande (2-5) se situe en dessous d'une valeur définie.

13. Dispositif de maintien au chaud (1) selon l'une quelconque des revendications précédentes, comportant un niveau de remplissage de petits pains (25) constitué pour un acheminement séquentiel de
-) d'abord une partie inférieure de petit pain (36) dans le but de déposer une tranche de plat de viande (37) séparée du plat de viande (2-5), et
-) ensuite une partie supérieure de petit pain (38) pour recouvrir la tranche de plat de viande (3) déposée sur la partie inférieure de petit pain (37) .

14. Dispositif de maintien au chaud (1) selon la revendication 13, le niveau de remplissage de petits pains (25) comportant un bac de réserve de petits pains (26) et étant constitué pour le prélèvement automatique de petits pains individuels ou de parties (36,38) de ceux-ci.

15. Dispositif de maintien au chaud (1) selon l'une quelconque des revendications 13 - 14, comportant un dispositif de distribution de petits pains, de préférence constitué comme un bac de réserve intermédiaire pour le stockage intermédiaire d'un nombre de petits pains (39) garnis terminés, notamment de préférence constitué comme un plateau tournant (30) pour loger un nombre de petits pains, comme par exemple quatre petits pains terminés. (39).
